# EUROPEAN PATENT APPLICATION

(11) **EP 4 668 853 A1**
(43) Date of publication of application: **24.12.2025**
(21) Application number: 23921727.6
(22) Date of filing: 14.02.2023
(51) Int. Cl.: H04W 36/00

(54) **TERMINAL CAPABILITY REPORTING METHOD, APPARATUS, AND DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076035
(87) International publication number: WO 2024/168559

(57) **Abstract**

The present invention relates to a terminal capability reporting method, apparatus, and device, and a storage medium. The method comprises: sending first capability information, the first capability information being used for indicating whether a terminal has the capability of supporting dynamic switching between a single transmission/reception point (TRP) scheme and a single-frequency network (SFN) scheme, wherein a unified transmission configuration indicator (TCI) state is configured for the terminal. According to the present invention, the capability of whether a terminal supports dynamic switching between a single TRP scheme and an SFN scheme is reported, such that in a unified TCI state, the transmission flexibility of a physical shared channel is improved.

## Description

### FIELD

The present disclosure relates to the field of communication technologies, and in particular relates to a method and an apparatus for reporting a capability of a terminal, a device for reporting a capability of a terminal and a storage medium.

### BACKGROUND

In a new radio (NR), especially in a case where a communication frequency band is in a frequency range 2, since high-frequency channels are attenuated quickly, beam-based transmission and reception are needed to ensure a coverage.

### SUMMARY

In order to overcome the problems existing in the related art, the present disclosure provides a method and an apparatus for reporting a capability of a terminal, a device for reporting a capability of a terminal and a storage medium.

According to a first aspect of embodiments of the present disclosure, there is provided a method for reporting a capability of a terminal, performed by the terminal, including: sending first capability information, in which the first capability information indicates whether the terminal has a capability of supporting a dynamic switching between a single transmission reception point (TRP) scheme and a single frequency network (SFN) scheme, and the terminal is configured with a unified transmission configuration indication (TCI) state.

In some implementations, the method further includes: determining a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In some implementations, the physical shared channel is configured for an SFN-based transmission.

In some implementations, the method further includes: performing the dynamic switching between the single TRP scheme and the SFN scheme according to the TCI selection field in the first indication information.

In some implementations, the method further includes: receiving second indication information, in which the second indication information is used to determine the unified TCI state, and the unified TCI state includes at least one set of TCI states.

In some implementations, a set of TCI states includes any one of: an uplink (UL) TCI state and/or a downlink (DL) TCI state; or a joint TCI state.

In some implementations, the method further includes: receiving first indication information carried by first downlink control information (DCI).

In some implementations, the first DCI includes at least one of: a DCI format 1_1, a DCI format 1_2, a DCI format 0_1, or a DCI format 0 2.

In some implementations, the method further includes: sending second capability information, in which the second capability information indicates that the terminal has a capability of supporting the SFN scheme, or indicates that the terminal has a capability of only supporting a physical downlink shared channel (PDSCH) SFN scheme.

In some implementations, the second indication information is carried by a first media access control-control element (MAC CE), the first MAC CE indicates the at least one set of TCI states, and the at least one set of TCI states corresponds to one code point of a TCI state field in second DCI.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some implementations, the physical shared channel includes at least one of: a physical uplink shared channel (PUSCH), or a PDSCH.

According to a second aspect of embodiments of the present disclosure, there is provided a method for reporting a capability of a terminal, performed by a network device, including: receiving first capability information, in which the first capability information indicates whether the terminal has a capability of supporting a dynamic switching between a single TRP scheme and an SFN scheme, and the terminal is configured with a unified TCI state.

In some implementations, the method further includes: determining a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In some implementations, the physical shared channel is configured for an SFN-based transmission.

In some implementations, the TCI selection field in the first indication information is further used to determine that the terminal performs the dynamic switching between the single TRP scheme and the SFN scheme.

In some implementations, the method further includes: sending second indication information, in which the second indication information is used to determine the unified TCI state, and the unified TCI state includes at least one set of TCI states.

In some implementations, a set of TCI states includes any one of: a UL TCI state and/or a DL TCI state; or a joint TCI state.

In some implementations, the method further includes: sending first indication information carried by first DCI.

In some implementations, the first DCI includes at least one of: a DCI format 1_1, a DCI format 1_2, a DCI format 0_1, or a DCI format 0_2.

In some implementations, the method further includes: receiving second capability information, in which the second capability information indicates that the terminal has a capability of supporting the SFN scheme, or indicates that the terminal has a capability of only supporting a PDSCH SFN scheme.

In some implementations, the second indication information is carried by a first MAC CE, the first MAC CE indicates the at least one set of TCI states, and the at least one set of TCI states corresponds to one code point of a TCI state field in second DCI.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some implementations, the physical shared channel includes at least one of: a PUSCH, or a PDSCH.

According to a third aspect of embodiments of the present disclosure, there is provided an apparatus for reporting a capability of a terminal, including: a sending module configured to send first capability information, in which the first capability information indicates whether the terminal has a capability of supporting a dynamic switching between a single TRP scheme and an SFN scheme, and the terminal is configured with a unified TCI state.

In some implementations, the apparatus further includes: a processing module configured to determine a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In some implementations, the physical shared channel is configured for an SFN-based transmission.

In some implementations, the processing module is further configured to perform the dynamic switching between the single TRP scheme and the SFN scheme according to the TCI selection field in the first indication information.

In some implementations, the apparatus further includes: a receiving module configured to receive second indication information, in which the second indication information is used to determine the unified TCI state, and the unified TCI state includes at least one set of TCI states.

In some implementations, a set of TCI states includes any one of: a UL TCI state and/or a DL TCI state; or a joint TCI state.

In some implementations, the receiving module is further configured to receive first indication information carried by first DCI.

In some implementations, the first DCI includes at least one of: a DCI format 1_1, a DCI format 1_2, a DCI format 0_1, or a DCI format 0_2.

In some implementations, the sending module is further configured to send second capability information, in which the second capability information indicates that the terminal has a capability of supporting the SFN scheme, or indicates that the terminal has a capability of only supporting a PDSCH SFN scheme.

In some implementations, the second indication information is carried by a first MAC CE, the first MAC CE indicates the at least one set of TCI states, and the at least one set of TCI states corresponds to one code point of a TCI state field in second DCI.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some implementations, the physical shared channel includes at least one of: a PUSCH, or a PDSCH.

According to a fourth aspect of embodiments of the present disclosure, there is provided an apparatus for reporting a capability of a terminal, including: a receiving module configured to receive first capability information, in which the first capability information indicates whether the terminal has a capability of supporting a dynamic switching between a single TRP scheme and an SFN scheme, and the terminal is configured with a unified TCI state.

In some implementations, the apparatus further includes a processing module configured to determine a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In some implementations, the physical shared channel is configured for an SFN-based transmission.

In some implementations, the TCI selection field in the first indication information is further used to determine that the terminal performs the dynamic switching between the single TRP scheme and the SFN scheme.

In some implementations, the apparatus further includes a sending module configured to send second indication information, in which the second indication information is used to determine the unified TCI state, and the unified TCI state includes at least one set of TCI states.

In some implementations, a set of TCI states includes any one of: a UL TCI state and/or a DL TCI state; or a joint TCI state.

In some implementations, the sending module is further configured to send first indication information carried by first DCI.

In some implementations, the first DCI includes at least one of: a DCI format 1_1, a DCI format 1_2, a DCI format 0_1, or a DCI format 0_2.

In some implementations, the receiving module is further configured to receive second capability information, in which the second capability information indicates that the terminal has a capability of supporting the SFN scheme, or indicates that the terminal has a capability of only supporting a PDSCH SFN scheme.

In some implementations, the second indication information is carried by a first MAC CE, the first MAC CE indicates the at least one set of TCI states, and the at least one set of TCI states corresponds to one code point of a TCI state field in second DCI.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some implementations, the physical shared channel includes at least one of: a PUSCH, or a PDSCH.

According to a fifth aspect of embodiments of the present disclosure, there is provided a device for reporting a capability of a terminal, including: a processor, and a memory for storing instructions executable by the processor, in which the processor is configured to perform the methods in the first aspect and any one of the embodiments of the first aspect.

According to a sixth aspect of embodiments of the present disclosure, there is provided a device for reporting a capability of a terminal, including: a processor, and a memory for storing instructions executable by the processor, in which the processor is configured to perform the methods in the second aspect and any one of the embodiments of the second aspect.

According to a seventh aspect of embodiments of the present disclosure, there is provided a non-transitory computer-readable storage medium having stored therein instructions that, when executed by a processor of a terminal, enable the terminal to perform the methods in the first aspect and any one of the embodiments of the first aspect.

According to an eighth aspect of embodiments of the present disclosure, there is provided a non-transitory computer-readable storage medium having stored therein instructions that, when executed by a processor of a network device, enable the network device to perform the methods in the second aspect and any one of the embodiments of the second aspect.

The technical solution provided in the embodiments of the present disclosure may include the following advantageous effects. By reporting whether the terminal has a capability of supporting a dynamic switching between the single TRP scheme and the SFN scheme, the transmission flexibility of the physical shared channel based on the unified TCI state is improved.

It is to be understood that both the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an illustrative embodiment.
FIG. 2 is a flow chart illustrating a method for reporting a capability of a terminal according to an illustrative embodiment.
FIG. 3 is a flow chart illustrating another method for reporting a capability of a terminal according to an illustrative embodiment.
FIG. 4 is a schematic diagram illustrating an apparatus for reporting a capability of a terminal according to an illustrative embodiment.
FIG. 5 is a schematic diagram illustrating another apparatus for reporting a capability of a terminal according to an illustrative embodiment.
FIG. 6 is a schematic diagram illustrating a device for reporting a capability of a terminal according to an illustrative embodiment.
FIG. 7 is a schematic diagram illustrating another device for reporting a capability of a terminal according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure.

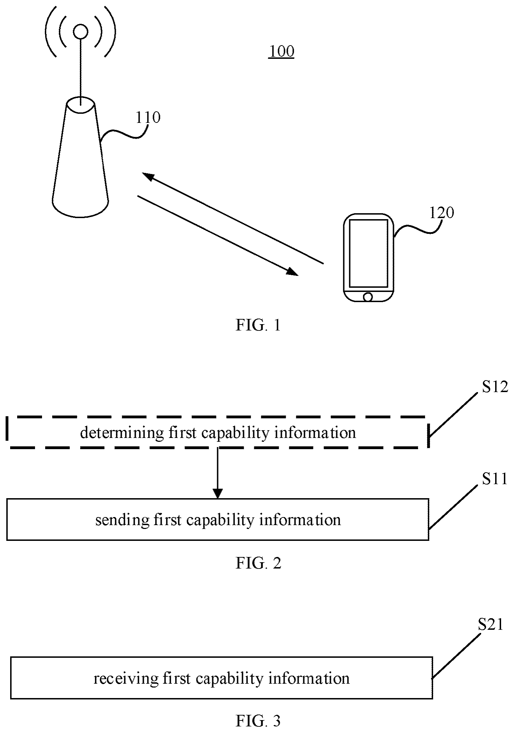

A method for reporting a capability of a terminal provided in the embodiments of the present disclosure may be performed by a wireless communication system illustrated in FIG. 1. The wireless communication system may include a network device 110 and a terminal 120. It may be understood that the wireless communication system shown in FIG. 1 is only for schematic illustration. The wireless communication system may also include other network devices, such as core network devices, wireless relay devices, and wireless backhaul devices, which are not shown in FIG. 1. The number of network devices and the number of terminals included in the wireless communication system are not limited in the embodiments of the present disclosure.

It may be further understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5th generation wireless communication system (5G) network, which may also be referred to as a new radio (NR) network, according to the capacity, rate, delay, and other factors of different networks. For ease of description, a wireless communication network will be sometimes abbreviated as a network in the present disclosure.

Further, the network device 110 involved in the present disclosure may also be referred to as a radio access network device. The radio access network device may be a base station, an evolved node B, a home base station, an access point (AP) in a wireless fidelity (Wi-Fi) system, a wireless relay node, a wireless backhaul node, a transmission point (TP), a transmission and reception point (TRP), or the like, or may also be a generation NodeB (gNB) in an NR system, or may also be a component or a part of a device that constitutes a base station, or the like. The network device may also be a vehicle-mounted device when it is used in a vehicle to everything (V2X) communication system. It is to be understood that the specific technology and specific device form adopted by the network device are not limited in the embodiments of the present disclosure.

Further, the terminal 120 involved in the present disclosure, which may also be referred to as a terminal device, a user equipment (UE), a mobile station (MS), a mobile terminal (MT), or the like, is a device that provides voice and/or data connectivity to a user. For example, the terminal may be a handheld device with a wireless connection function, a vehicle-mounted device, or the like. At present, some examples of the terminal are a smart phone, a pocket personal computer (PPC), a palmtop computer, a personal digital assistant (PDA), a notebook computer, a tablet computer, a wearable device, a vehicle-mounted device, or the like. In addition, the terminal device may also be a vehicle-mounted device when it is used in a vehicle to everything (V2X) communication system. It is to be understood that the specific technology and specific device form adopted by the terminal are not limited in the embodiments of the present disclosure.

In the embodiments of the present disclosure, the network device 110 and the terminal 120 may use any feasible wireless communication technology to achieve mutual data transmissions. A transmission channel corresponding to data sent by the network device 110 to the terminal 120 is called a downlink (DL) channel, and a transmission channel corresponding to data sent by the terminal 120 to the network device 110 is called an uplink (UL) channel. It may be understood that the network device involved in the embodiments of the present disclosure may be a base station. Certainly, the network device may also be any other possible network device, and the terminal may be any possible terminal, which is not limited in the present disclosure.

In the NR, especially in a case where a communication frequency band is in a frequency range 2, since high-frequency channels are attenuated quickly, beam-based transmission and reception are needed to ensure a coverage.

In release (Rel) 16, beams used for transmissions of a physical downlink control channel (PDCCH) and/or a demodulation reference signal (DMRS) of the PDCCH, a physical downlink shared channel (PDSCH) and/or a DMRS of the PDSCH, a physical uplink control channel (PUCCH) and/or a DMRS of the PUCCH, a physical uplink shared channel (PUSCH) and/or a DMRS of the PUSCH, and/or a reference signal are all independently indicated. The reference signal may include a channel status information-reference signal (CSI-RS), a sounding reference signal (SRS), a positioning reference signal (PRS), a time-frequency tracking reference signal (TRS), and the like. For example, the CSI-RS may include a CSI-RS for a channel status information measurement, a CSI-RS for a beam measurement, or a CSI-RS for path loss estimation. The SRS may include an SRS for a channel status information measurement based on a codebook or non-codebook, an SRS for a beam measurement, or an SRS for a positioning measurement.

Generally, in the related art, transmissions of the PDCCH and/or the DMRS of the PDCCH, and the PUCCH and/or the DMRS of the PUCCH activate one beam by an MAC CE, while transmissions of the PDSCH and/or the DMRS of the PDSCH, and the PUSCH and/or the DMRS of the PUSCH indicate their respective beams by a DCI signaling, respectively. Here, the beam may be indicated by transmitting a TCI state or spatial relationship information (spatialrelationinfo).

In order to reduce the signaling overhead, in Rel-17, it is proposed to adopt a unified TCI state. The unified TCI state may be a separate indication of an uplink and a downlink, such as a DL TCI state and a UL TCI state. The unified TCI state may also be an uplink and downlink joint indication, such as a joint TCI state. For example, in a case where the network device indicates a DL TCI state for a downlink, the DL TCI state may be used for transmissions of the PDSCH and/or the DMRS of the PDSCH, the PDCCH and/or the DMRS of the PDCCH, and at least a part of the CSI-RS of the terminal. The at least a part of the CSI-RS may be a periodic CSI-RS. For another example, in a case where the network device indicates a UL TCI state for an uplink, the UL TCI state may be used for transmissions of the PUSCH and/or the DMRS of the PUSCH, the PUCCH and/or the DMRS of the PUCCH, and at least a part of the SRS of the terminal. For yet another example, in a case where the network device indicates a joint TCI state, the joint TCI state may be used for transmissions of both uplink and downlink channels and/or a reference signal.

It may be understood that the TCI state may be used to indicate which receiving beams the terminal uses when receiving the PDCCH and/or the DMRS of the PDCCH, and/or the PDSCH and/or the DMRS of the PDSCH, for example, a receiving beam corresponding to a sending beam similar to which synchronization signal block (SSB) or CSI-RS sent by the network device the terminal receives. That is, the PDCCH and/or the DMRS of the PDCCH, and/or the PDSCH and/or the DMRS of the PDSCH are quasi-co-located with the SSB or the CSI-RS. The TCI state may also indicate which sending beams the terminal uses when sending the PUCCH and/or the DMRS of the PUCCH, and/or the PUSCH and/or the DMRS of the PUSCH, for example, a sending beam corresponding to a receiving beam similar to which SSB or CSI-RS sent by the network device the terminal receives, or a sending beam similar to which SRS the terminal sends. That is, the PUCCH and/or the DMRS of the PUCCH, and/or the PUSCH and/or the DMRS of the PUSCH are quasi-co-located with the SSB, the CSI-RS, or the SRS. The beam refers to a quasi co-location (QCL) type D.

The beams involved above may be indicated by the TCI state or spatialrelationinfo. A TCI state corresponding to the PDCCH includes a TCI state corresponding to the PDCCH and/or the DMRS of the PDCCH, that is, the TCI state is used to receive the PDCCH and/or the DMRS of the PDCCH. Similarly, a TCI state corresponding to the PDSCH includes a TCI state corresponding to the PDSCH and/or the DMRS of the PDSCH, that is, the TCI state is used to receive the PDSCH and/or the DMRS of the PDSCH. A TCI state or spatialrelationinfo corresponding to the PUCCH includes a TCI state or spatialrelationinfo corresponding to the PUCCH and/or the DMRS of the PUCCH, that is, the TCI state or spatialrelationinfo is used to send the PUCCH and/or the DMRS of the PUCCH. A TCI state or spatialrelationinfo corresponding to the PUSCH includes a TCI state or spatialrelationinfo corresponding to the PUSCH and/or the DMRS of the PUSCH, that is, the TCI state or spatialrelationinfo is used to send the PUSCH and/or the DMRS of the PUSCH.

However, currently, in Rel-17, only a unified TCI state for a single-TRP is considered. That is, only one set of unified TCI states is considered for a beam indication. For example, the UL TCI state, the DL TCI state, and/or the joint TCI state may be included. In a case where there are multi-TRPs to provide a transmission service for the terminal, multiple sets of TCI states will be configured correspondingly. In this case, how to indicate multiple sets of unified TCI states has not yet been determined.

In the case of multi-TRPs, a method for single DCI is included. Correspondingly, among the PDCCH and/or the DMRS of the PDCCH, the PDSCH and/or the DMRS of the PDSCH, the PUCCH and/or the DMRS of the PUCCH, and the PUSCH and/or the DMRS of the PUSCH, in a case where some of the channels and/or the DMRS of the channels are configured with the multi-TRPs, and the others of the channels and/or the DMRS of the channels are configured with the single-TRP, then when the unified TCI state indicates the multiple sets of TCI states, for the channels configured with the multi-TRPs, it may be needed to implement dynamic switching between the multi-TRPs and the single-TRP. Therefore, how to determine which one or more sets of the multiple sets of TCI states each channel corresponds to needs an additional signaling for indication.

In a related solution, the PDCCH uses a radio resource control (RRC) signaling to determine which one or more of the multiple sets of TCI states each control resource set (CORESET) or CORESET group is based on to receive the PDCCH. Furthermore, the PUCCH also determines according to an RRC signaling, which one or more sets of the multiple sets of TCI states each PUCCH or PUCCH group is based on to send the PUCCH. The PDSCH determines, according to a first indication field of the PDSCH in the DCI, which one or more of the multiple sets of TCI states each PDSCH is based on to receive the PDSCH. The PUSCH determines, according to a second indication field of the PUSCH in the DCI, which one or more of the multiple sets of TCI states each PUSCH is based on to send the PUSCH.

However, the PDSCH and the PUSCH may configure a single frequency network (SFN) scheme, for example, the SFN scheme may include the following two ways.

SFN scheme A: it is indicated that the same transport block (TB) is transmitted via different TCI states on the same frequency domain resource, the same time domain resource and the same DMRS port of a code division multiplexing (CDM) group, and the PDSCH/PUSCH has a QCL relationship with parameters in two TCI states.

SFN scheme B: it is indicated that the same TB is transmitted via different TCI states on the same frequency domain resource, the same time domain resource and the same DMRS port of the CDM group, and the PDSCH/PUSCH has a QCL relationship with parameters in two TCI states except for some of parameters in the second TCI state, in which these parameters in the second TCI state may include Doppler shift parameters, Doppler spread parameters, and the like.

In a case where the physical shared channel (e.g., the PDSCH and/or the PUSCH) is configured as an SFN solution, it is also needed to consider whether the terminal has the ability to support a dynamic SFN.

In the related art, it is described that a capability of the terminal is indicated according to the TCI state field in the DCI. However, in the scenario of a unified TCI state, the TCI state field indicates the unified TCI state. That is, the TCI state field not only indicates the TCI state of the PDSCH, but also indicates the TCI state of other channels. For a relationship between the TCI state of the PDSCH and the unified TCI state indicated by the TCI state field, a new indication field is needed for indication.

Apparently, in the scenario of the unified TCI state, whether the terminal has a capability of supporting the SFN will not be indicated by the TCI state field.

Therefore, the present disclosure provides a method and an apparatus for reporting a capability of a terminal, a device for reporting a capability of a terminal and a storage medium. By reporting whether the terminal has the capability of supporting the dynamic switching between the single TRP scheme and the SFN scheme, the transmission flexibility of the physical shared channel based on the unified TCI state is improved.

FIG. 2 is a flow chart illustrating a method for reporting a capability of a terminal according to an illustrative embodiment. As shown in FIG. 2, the method is performed by the terminal, and may include the following steps.

In step S11, first capability information is sent.

In some embodiments, the terminal may send the first capability information to a network device, in which the first capability information indicates whether the terminal has a capability of supporting a dynamic switching between a single TRP scheme and an SFN scheme, and the terminal is configured with a unified TCI state.

For example, the terminal may determine to perform the dynamic switching between the single TRP scheme and the SFN scheme according to a TCI selection field in DCI. The terminal is configured with the unified TCI state, which may be understood as the terminal being configured with a DL TCI state, a UL TCI state and/or a joint TCI state.

It may be understood that in some embodiments, the following steps may be further included before S11.

In step S12, the first capability information is determined.

In some embodiments, the first capability information of the terminal may be preset, or may be determined by the terminal according to its own actual situation. For example, the terminal determines the first capability information according to a certain version to which the terminal belongs. First capability information corresponding to different versions may be the same or different. For another example, the terminal determines the first capability information according to its own hardware or software capabilities. For yet another example, the terminal pre-stores preset first capability information.

It may be understood that the process of determining the first capability information by the terminal is not limited in the present disclosure.

In the present disclosure, by reporting whether the terminal has the capability of supporting the dynamic switching between the single TRP scheme and the SFN scheme, the transmission flexibility of the physical shared channel based on the unified TCI state is improved.

In the method for reporting the capability of the terminal provided in the embodiments of the present disclosure, the method may further include: determining a TCI state used for a transmission on a physical shared channel according to a TCI selection field in first indication information or according to a default rule.

In some embodiments, the terminal may determine the TCI state used for the transmission on the physical shared channel according to the TCI selection field in the first indication information. The TCI selection field in the first indication information is used to determine one or more sets of TCI states corresponding to the physical shared channel. That is, the terminal may perform the transmission on the physical shared channel according to one or more sets of TCI states determined by the TCI selection field in the first indication information.

It should be understood that the TCI selection field in each embodiment of the present disclosure may also be referred to as a TCI association field or a TCI mapping field.

In some embodiments, the terminal may determine the TCI state used for the transmission on the physical shared channel according to the default rule.

It may be understood that the physical shared channel may include, for example, a PDSCH and/or a PUSCH.

In some embodiments, in the method for reporting the capability of the terminal provided in the embodiments of the present disclosure, the method may further include: using the TCI selection field to determine to select one or more sets of TCI states from the unified TCI state for the transmission on the physical shared channel in response to the terminal supporting the dynamic switching.

For example, the unified TCI state configured in the terminal includes multiple sets of TCI states. In a case where the terminal supports the dynamic switching between the single TRP scheme and the SFN scheme, the terminal may determine to select one or more sets of TCI states from the unified TCI state for the transmission on the physical shared channel according to the TCI selection field in the first indication information.

It may be understood that in a case where the TCI selection field in the first indication information is used to determine to select one set of TCI states from the unified TCI state for the transmission on the physical shared channel, it may be considered that the terminal has switched to the single TRP scheme. In a case where the TCI selection field in the first indication information is used to determine to select multiple sets of TCI states from the unified TCI state for the transmission on the physical shared channel, it may be considered that the terminal has switched to the SFN scheme.

In some embodiments, in the method for reporting the capability of the terminal provided in the embodiments of the present disclosure, the method may further include: using the TCI selection field to determine to select the multiple sets of TCI states from the unified TCI state for the transmission on the physical shared channel in response to the terminal not supporting the dynamic switching.

For example, the unified TCI state configured in the terminal includes the multiple sets of TCI states. In a case where the terminal does not support the dynamic switching between the single TRP scheme and the SFN scheme, the terminal may only determine to select the multiple sets of TCI states from the unified TCI state for the transmission on the physical shared channel according to the TCI selection field in the first indication information. That is, in a case where the terminal does not support the dynamic switching between the single TRP scheme and the SFN scheme, the terminal may not perform the transmission on the physical shared channel according to the single TRP scheme.

In some embodiments, in the method for reporting the capability of the terminal provided in the embodiments of the present disclosure, the method may further include: the terminal being capable of determining to select the multiple sets of TCI states from the unified TCI state for the transmission on the physical shared channel according to the default rule in response to the terminal not supporting the dynamic switching and the first indication information not including the TCI selection field.

For example, the unified TCI state configured in the terminal includes the multiple sets of TCI states. In a case where the terminal does not support the dynamic switching between the single TRP scheme and the SFN scheme, and the terminal determines that the first indication information does not include the TCI selection field according to an RRC signaling configuration, that is, the TCI selection field is configured not to appear in the first indication information, then the terminal may determine to select the multiple sets of TCI states from the unified TCI state for the transmission on the physical shared channel according to the default rule. That is, in a case where the terminal does not support the dynamic switching between the single TRP scheme and the SFN scheme, the terminal may not perform the transmission on the physical shared channel according to the single TRP scheme. It may be understood that the default rule may be stipulated in a protocol or preset, which is not limited in the present disclosure.

It should be understood that the single TRP scheme represents that the terminal uses one set of TCI states for the transmission on the physical shared channel, and the SFN scheme represents that the terminal uses the multiple sets of TCI states for the transmission on the physical shared channel.

In the present disclosure, in a case of the unified TCI state, the TCI state used may be determined according to the TCI selection field in the first indication information or according to the default rule, and the transmission on the physical shared channel according to the single TRP scheme and the SFN scheme may be adapted, thereby improving the transmission flexibility of the physical shared channel.

In the method for reporting the capability of the terminal provided in the embodiments of the present disclosure, the physical shared channel is configured for an SFN-based transmission.

In some embodiments, the PDSCH and/or the PUSCH may be configured for the SFN-based transmission.

That is, the PDSCH and/or the PUSCH may be configured for the transmission by using the multiple sets of TCI states.

The physical shared channel involved in the present disclosure may be configured for the SFN-based transmission, which improves the transmission flexibility of the physical shared channel.

In the method for reporting the capability of the terminal provided in the embodiments of the present disclosure, the method may further include: performing the dynamic switching between the single TRP scheme and the SFN scheme according to the TCI selection field in the first indication information.

In some embodiments, the terminal may perform the dynamic switching between the single TRP scheme and the SFN scheme according to the TCI selection field in the first indication information.

That is, the dynamic switching between the single TRP scheme and the SFN scheme may be indicated according to the TCI selection field in the first indication information.

For example, in a case where the TCI selection field in the first indication information indicates an association relationship between one set of TCI states and the physical shared channel, the terminal may determine to switch to the single TRP scheme according to the TCI selection field in the first indication information, and use the set of TCI states indicated to perform the transmission on the corresponding physical shared channel.

For example, in a case where the TCI selection field in the first indication information indicates an association relationship between the multiple sets of TCI states and the physical shared channel, the terminal may determine to switch to the SFN scheme according to the TCI selection field in the first indication information, and use the multiple sets of TCI states indicated to perform the transmission on the corresponding physical shared channel.

In the present disclosure, in a case of the unified TCI state, the dynamic switching between the single TRP scheme and the SFN scheme may be indicated according to the TCI selection field in the first indication information, thereby improving the transmission flexibility of the physical shared channel.

In the method for reporting the capability of the terminal provided in the embodiments of the present disclosure, the method may further include: receiving second indication information, in which the second indication information is used to determine the unified TCI state, and the unified TCI state includes at least one set of TCI states.

In some embodiments, the terminal may receive the second indication information, in which the second indication information is used to determine the unified TCI state, and the unified TCI state may include at least one set of TCI states. For example, the unified TCI state may include *N* sets of TCI states, where *N* is a positive integer greater than or equal to 1.

For example, the terminal receives the second indication information sent by the network device. The second indication information directly indicates *N* sets of TCI states.

For another example, the terminal determines *N* sets of TCI states indicated by receiving multiple pieces of second indication information. For example, a first piece of second indication information indicates two sets of TCI states, including a first set of TCI states and a second set of TCI states. A second piece of second indication information may indicate one set of TCI states, and the one set of TCI states indicated by the second piece of second indication information may be an update of a first set of TCI states among the two sets of TCI states indicated by the first piece of second indication information. Therefore, the *N* sets of TCI states may include only one set of TCI states indicated by the second piece of second indication information, or the *N* sets of TCI states may include the second set of TCI states indicated by the first piece of second indication information and the first set of TCI states indicated by the second piece of second indication information. It should be understood that the first set of TCI states and/or the second set of TCI states included in the *N* sets of TCI states should be the latest first set of TCI states and the latest second set of TCI states respectively indicated by the multiple pieces of second indication information.

For another example, the first piece of second indication information indicates one set of TCI states, for example, corresponding to the first set of TCI states; and the second piece of second indication information indicates one set of TCI states, for example, corresponding to the second set of TCI states. The *N* sets of TCI states may include the first set of TCI states and the second set of TCI states respectively indicated by two pieces of second indication information. The first set of TCI states and the second set of TCI states may be understood as corresponding to different TRPs, or corresponding to different bit positions included in an MAC CE, or corresponding to other features, which are not limited in the present disclosure.

The present disclosure is applicable to a scenario where the unified TCI state includes the multiple sets of TCI states. By reporting whether the terminal has the capability of supporting the dynamic switching between the single TRP scheme and the SFN scheme, the transmission flexibility of the physical shared channel based on the unified TCI state is improved.

In the method for reporting the capability of the terminal provided in the embodiments of the present disclosure, a set of TCI states includes any one of: a UL TCI state and/or a DL TCI state; or a joint TCI state.

In some embodiments, a set of TCI states may include the UL TCI state and/or the DL TCI state.

For example, a set of TCI states may include the UL TCI state. For another example, a set of TCI states may include the DL TCI state. For yet another example, a set of TCI states may include the UL TCI state and the DL TCI state.

In some embodiments, a set of TCI states may include the joint TCI state.

It may be understood that the joint TCI state may indicate both the UL TCI state and the DL TCI state.

The present disclosure provides various expressions of a set of TCI states, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the method may further include: receiving first indication information carried by first DCI.

In some embodiments, the terminal may further receive the first indication information. The first indication information is carried by the first DCI.

It may be understood that the first DCI includes the TCI selection field, and the TCI selection field is used to determine an association relationship between the physical shared channel and the at least one set of TCI states. The at least one set of TCI states may be determined according to the second indication information.

In other words, the TCI selection field in the first DCI may be used to determine which one or more sets of TCI states of the at least one set of TCI states are used for the transmission on the PDSCH and/or the PUSCH. The terminal may perform the dynamic switching between the single TRP scheme and the SFN scheme according to one or more sets of TCI states determined by the TCI selection field. For example, the TCI selection field is used to determine one set of TCI states, and the terminal switches to the single TRP scheme; and for another example, the TCI selection field is used to determine the multiple sets of TCI states, and the terminal switches to the SFN scheme.

In the present disclosure, in a case of the unified TCI state, a relationship between the physical shared channel and the TCI state is determined according to the TCI selection field in the first indication information, such that the dynamic switching between the single TRP scheme and the SFN scheme may be indicated, thereby improving the transmission flexibility of the physical shared channel.

In the method for reporting the capability of the terminal provided in the embodiments of the present disclosure, the first DCI includes at least one of: a DCI format 1_1, a DCI format 1_2, a DCI format 0_1, or a DCI format 0_2.

In some embodiments, the first DCI may include the DCI format 1_1.

For example, in a case where the first DCI indicates the association relationship between the PDSCH and the TCI state, the first DCI may be the DCI format 1_1.

In some embodiments, the first DCI may include the DCI format 1_2.

For example, in a case where the first DCI indicates the association relationship between the PDSCH and the TCI state, the first DCI may be the DCI format 1_2.

In some embodiments, the first DCI may include the DCI format 0_1.

For example, in a case where the first DCI indicates the association relationship between the PUSCH and the TCI state, the first DCI may be the DCI format 0_1.

In some embodiments, the first DCI may include the DCI format 0_2.

For example, in a case where the first DCI indicates the association relationship between the PUSCH and the TCI state, the first DCI may be the DCI format 0_2.

In some embodiments, the first DCI may further include: DCI format 1_1, and DCI format 1_2; DCI format 1_1, and DCI format 0_1; DCI format 1_1, and DCI format 0_2; DCI format 1_2, and DCI format 0_1; DCI format 1_2, and DCI format 0_2; DCI format 0_1, and DCI format 0_2; DCI format 1_1, DCI format 1_2, and DCI format 0_1; DCI format 1_1, DCI format 1_2, and DCI format 0_2; DCI format 1_1, DCI format 0_1, and DCI format 0_2; DCI format 1_2, DCI format 0_1, and DCI format 0_2; or DCI format 1_1, DCI format 1_2, DCI format 0_1, and DCI format 0_2.

The present disclosure provides multiple forms of the first DCI to indicate the relationship between different physical shared channels and the TCI state, thereby implementing the dynamic switching between the single TRP scheme and the SFN scheme, and thus improving the transmission flexibility of the physical shared channel.

In the method for reporting the capability of the terminal provided in the embodiments of the present disclosure, the method may further include: sending second capability information, in which the second capability information indicates that the terminal has a capability of supporting the SFN scheme, or indicates that the terminal has a capability of only supporting a PDSCH SFN scheme.

In some embodiments, the terminal may send the second capability information to the network device. The second capability information may indicate that the terminal has the capability of supporting the SFN scheme.

For example, the second capability information may indicate that the terminal supports the sfn-Scheme.

In some embodiments, the terminal may send the second capability information to the network device. The second capability information may indicate that the terminal has the capability of only supporting the PDSCH SFN scheme.

For example, the second capability information may indicate that the terminal supports the sfn-Scheme-PDSCH-only.

It may be understood that a second capability may be a prerequisite capability for the terminal to support a first capability.

In the present disclosure, information of other capabilities of the terminal different from the first capability information may be further reported, thereby improving the transmission flexibility of the physical shared channel based on the unified TCI state.

In the method for reporting the capability of the terminal provided in the embodiments of the present disclosure, the second indication information is carried by a first MAC CE, the first MAC CE indicates the at least one set of TCI states, and the at least one set of TCI states corresponds to one code point of a TCI state field in second DCI.

In some embodiments, the second indication information may be carried by the first MAC CE. The first MAC CE may indicate the at least one set of TCI states, for example, *N* sets of TCI states. The at least one set of TCI states may correspond to one code point of the TCI state field in the second DCI. In this case, the TCI state field in the second DCI does not need to further indicate the code point.

The present disclosure provides a method for indicating the at least one set of TCI states by carrying the second indication information by the MAC CE, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some embodiments, the second indication information may be carried by the second MAC CE and the third DCI. The second MAC CE may indicate multiple at least one set of TCI states, for example, multiple *N* sets of TCI states. It may be understood that each of the *N* sets of TCI states corresponds to one code point. That is, the second MAC CE indicates the *N* sets of TCI states corresponding to the multiple code points respectively. The TCI state field in the third DCI indicates one code point among the multiple code points. Therefore, a specific *N* sets of TCI states among the multiple *N* sets of TCI states is further indicated.

It may be understood that values of *N* may be the same or different in the *N* sets of TCI states corresponding to the multiple code points.

The present disclosure provides a method for indicating the at least one set of TCI states by carrying the second indication information by the MAC CE and the DCI, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the physical shared channel includes at least one of: the PUSCH, or the PDSCH.

In some embodiments, the physical shared channel includes the PUSCH.

For example, the terminal may determine an association relationship between the PUSCH and the at least one set of TCI states according to the TCI selection field in the first indication information.

In some embodiments, the physical shared channel includes the PDSCH.

For example, the terminal may determine an association relationship between the PDSCH and the at least one set of TCI states according to the TCI selection field in the first indication information.

In some embodiments, the physical shared channel includes the PUSCH and the PDSCH.

For example, the terminal may determine, according to the TCI selection field in the first indication information, the association relationship between the PUSCH and the at least one set of TCI states, and the association relationship between the PDSCH and the at least one set of TCI states.

The present disclosure is applicable to various physical shared channels to indicate the relationship between the corresponding physical shared channel and the TCI state according to the first indication information, thereby implementing the dynamic switching between the single TRP scheme and the SFN scheme, and improving the transmission flexibility of the physical shared channel.

Based on the same concept, the present disclosure further provides a method for reporting a capability of a terminal, performed by a network device.

FIG. 3 is a flow chart illustrating another method for reporting a capability of a terminal according to an illustrative embodiment. As shown in FIG. 3, the method is performed by a network device, and may include the following step.

In step S21, first capability information is received.

In some embodiments, the network device may receive the first capability information sent by the terminal, in which the first capability information indicates whether the terminal has a capability of supporting a dynamic switching between a single TRP scheme and an SFN scheme, and the terminal is configured with a unified TCI state.

For example, the terminal may determine to perform the dynamic switching between the single TRP scheme and the SFN scheme according to a TCI selection field in DCI sent by the network device. The terminal is configured with the unified TCI state, which may be understood as the terminal being configured with a DL TCI state, a UL TCI state and/or a joint TCI state. That is, the network device may indicate the DL TCI state, the UL TCI state and/or the joint TCI state for the terminal.

In the present disclosure, by reporting whether the terminal has the capability of supporting the dynamic switching between the single TRP scheme and the SFN scheme, the transmission flexibility of the physical shared channel based on the unified TCI state is improved.

In the method for reporting the capability of the terminal provided in the embodiments of the present disclosure, the method may further include: determining a TCI state used for a transmission on a physical shared channel according to a TCI selection field in first indication information or according to a default rule.

In some embodiments, the network device may determine the TCI state used for the transmission on the physical shared channel according to the TCI selection field in the first indication information. The TCI selection field in the first indication information is used to determine one or more sets of TCI states corresponding to the physical shared channel. That is, the terminal may perform the transmission on the physical shared channel according to one or more sets of TCI states determined by the TCI selection field in the first indication information.

It should be understood that the TCI selection field in each embodiment of the present disclosure may also be referred to as a TCI association field or a TCI mapping field.

In some embodiments, the network device may determine the TCI state used for the transmission on the physical shared channel according to the default rule.

It may be understood that the physical shared channel may include, for example, a PDSCH and/or a PUSCH.

In some embodiments, in the method for reporting the capability of the terminal provided in the embodiments of the present disclosure, the method may further include: using the TCI selection field to determine to select one or more sets of TCI states from the unified TCI state for the transmission on the physical shared channel in response to the terminal supporting the dynamic switching.

For example, the unified TCI state configured by the network device for the terminal includes multiple sets of TCI states. In a case where the terminal supports the dynamic switching between the single TRP scheme and the SFN scheme, the network device may determine that the terminal selects one or more sets of TCI states from the unified TCI state for the transmission on the physical shared channel according to the TCI selection field in the first indication information.

It may be understood that in a case where the TCI selection field in the first indication information is used to determine to select one set of TCI states from the unified TCI state for the transmission on the physical shared channel, it may be considered that the terminal has switched to the single TRP scheme. In a case where the TCI selection field in the first indication information is used to determine to select multiple sets of TCI states from the unified TCI state for the transmission on the physical shared channel, it may be considered that the terminal has switched to the SFN scheme.

In some embodiments, in the method for reporting the capability of the terminal provided in the embodiments of the present disclosure, the method may further include: using the TCI selection field to determine to select the multiple sets of TCI states from the unified TCI state for the transmission on the physical shared channel in response to the terminal not supporting the dynamic switching.

For example, the unified TCI state configured by the network device for the terminal includes the multiple sets of TCI states. In a case where the terminal does not support the dynamic switching between the single TRP scheme and the SFN scheme, the network device may only determine that the terminal selects the multiple sets of TCI states from the unified TCI state for the transmission on the physical shared channel according to the TCI selection field in the first indication information. That is, in a case where the terminal does not support the dynamic switching between the single TRP scheme and the SFN scheme, the terminal may not perform the transmission on the physical shared channel according to the single TRP scheme.

In some embodiments, in the method for reporting the capability of the terminal provided in the embodiments of the present disclosure, the method may further include: the network device being capable of determining to select the multiple sets of TCI states from the unified TCI state for the transmission on the physical shared channel according to the default rule in response to the terminal not supporting the dynamic switching and the first indication information not including the TCI selection field.

For example, the unified TCI state configured by the network device for the terminal includes the multiple sets of TCI states. In a case where the terminal does not support the dynamic switching between the single TRP scheme and the SFN scheme, and the first indication information does not include the TCI selection field, that is, the TCI selection field is configured not to appear in the first indication information, then the network device may determine that the terminal selects the multiple sets of TCI states from the unified TCI state for the transmission on the physical shared channel according to the default rule. That is, in a case where the terminal does not support the dynamic switching between the single TRP scheme and the SFN scheme, the terminal may not perform the transmission on the physical shared channel according to the single TRP scheme. It may be understood that the default rule may be stipulated in a protocol or preset, which is not limited in the present disclosure.

It should be understood that the single TRP scheme represents that the terminal uses one set of TCI states for the transmission on the physical shared channel, and the SFN scheme represents that the terminal uses the multiple sets of TCI states for the transmission on the physical shared channel.

In the present disclosure, in a case of the unified TCI state, the TCI state used may be determined according to the TCI selection field in the first indication information or according to the default rule, and the transmission on the physical shared channel according to the single TRP scheme and the SFN scheme may be adapted, thereby improving the transmission flexibility of the physical shared channel.

In the method for reporting the capability of the terminal provided in the embodiments of the present disclosure, the physical shared channel is configured for an SFN-based transmission.

In some embodiments, the PDSCH and/or the PUSCH may be configured for the SFN-based transmission.

That is, the PDSCH and/or the PUSCH may be configured for the transmission by using the multiple sets of TCI states.

The physical shared channel involved in the present disclosure may be configured for the SFN-based transmission, which improves the transmission flexibility of the physical shared channel.

In the method for reporting the capability of the terminal provided in the embodiments of the present disclosure, the TCI selection field in the first indication information further indicates that the terminal performs the dynamic switching between the single TRP scheme and the SFN scheme.

In some embodiments, the TCI selection field in the first indication information further indicates that the terminal performs the dynamic switching between the single TRP scheme and the SFN scheme.

That is, the dynamic switching between the single TRP scheme and the SFN scheme may be indicated by the terminal according to the TCI selection field in the first indication information.

For example, in a case where the TCI selection field in the first indication information indicates an association relationship between one set of TCI states and the physical shared channel, the terminal may determine to switch to the single TRP scheme according to the TCI selection field in the first indication information, and use the set of TCI states indicated to perform the transmission on the corresponding physical shared channel.

For example, in a case where the TCI selection field in the first indication information indicates an association relationship between the multiple sets of TCI states and the physical shared channel, the terminal may determine to switch to the SFN scheme according to the TCI selection field in the first indication information, and use the multiple sets of TCI states indicated to perform the transmission on the corresponding physical shared channel.

In the present disclosure, in a case of the unified TCI state, the dynamic switching between the single TRP scheme and the SFN scheme may be indicated according to the TCI selection field in the first indication information, thereby improving the transmission flexibility of the physical shared channel.

In the method for reporting the capability of the terminal provided in the embodiments of the present disclosure, the method may further include: sending second indication information, in which the second indication information is used to determine the unified TCI state, and the unified TCI state includes at least one set of TCI states.

In some embodiments, the network device may send the second indication information, in which the second indication information indicates the unified TCI state, and the unified TCI state may include at least one set of TCI states. For example, the unified TCI state may include *N* sets of TCI states, where *N* is a positive integer greater than or equal to 1.

For example, the network device sends the second indication information to the terminal. The second indication information directly indicates *N* sets of TCI states.

For another example, the network device sends multiple pieces of second indication information to the terminal to determine the *N* sets of TCI states indicated. For example, a first piece of second indication information indicates two sets of TCI states, including a first set of TCI states and a second set of TCI states. A second piece of second indication information may indicate one set of TCI states, and the one set of TCI states indicated by the second piece of second indication information may be an update of a first set of TCI states among the two sets of TCI states indicated by the first piece of second indication information. Therefore, the *N* sets of TCI states may include only one set of TCI states indicated by the second piece of second indication information, or the *N* sets of TCI states may include the second set of TCI states indicated by the first piece of second indication information and the first set of TCI states indicated by the second piece of second indication information. It should be understood that the first set of TCI states and/or the second set of TCI states included in the *N* sets of TCI states should be the latest first set of TCI states and the latest second set of TCI states respectively indicated by the multiple pieces of second indication information.

For another example, the first piece of second indication information indicates one set of TCI states, for example, corresponding to the first set of TCI states; and the second piece of second indication information indicates one set of TCI states, for example, corresponding to the second set of TCI states. The *N* sets of TCI states may include the first set of TCI states and the second set of TCI states respectively indicated by two pieces of second indication information. The first set of TCI states and the second set of TCI states may be understood as corresponding to different TRPs, or corresponding to different bit positions included in an MAC CE, or corresponding to other features, which are not limited in the present disclosure.

The present disclosure is applicable to a scenario where the unified TCI state includes the multiple sets of TCI states. By reporting whether the terminal has the capability of supporting the dynamic switching between the single TRP scheme and the SFN scheme, the transmission flexibility of the physical shared channel based on the unified TCI state is improved.

In the method for reporting the capability of the terminal provided in the embodiments of the present disclosure, a set of TCI states includes any one of: a UL TCI state and/or a DL TCI state; or a joint TCI state.

In some embodiments, a set of TCI states may include the UL TCI state and/or the DL TCI state.

For example, a set of TCI states may include the UL TCI state. For another example, a set of TCI states may include the DL TCI state. For yet another example, a set of TCI states may include the UL TCI state and the DL TCI state.

In some embodiments, a set of TCI states may include the joint TCI state.

It may be understood that the joint TCI state may indicate both the UL TCI state and the DL TCI state.

The present disclosure provides various expressions of a set of TCI states, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the method may further include: sending first indication information carried by first DCI.

In some embodiments, the network device may further send the first indication information to the terminal. The first indication information is carried by the first DCI.

It may be understood that the first DCI includes the TCI selection field, and the TCI selection field is used to determine an association relationship between the physical shared channel and the at least one set of TCI states. The at least one set of TCI states may be determined according to the second indication information.

In other words, the TCI selection field in the first DCI may be used to determine which one or more sets of TCI states of the at least one set of TCI states are used for the transmission on the PDSCH and/or the PUSCH. The terminal may perform the dynamic switching between the single TRP scheme and the SFN scheme according to one or more sets of TCI states determined by the TCI selection field. For example, the TCI selection field is used to determine one set of TCI states, and the terminal switches to the single TRP scheme; and for another example, the TCI selection field is used to determine the multiple sets of TCI states, and the terminal switches to the SFN scheme.

In the present disclosure, in a case of the unified TCI state, a relationship between the physical shared channel and the TCI state is determined according to the TCI selection field in the first indication information, such that the dynamic switching between the single TRP scheme and the SFN scheme may be indicated, thereby improving the transmission flexibility of the physical shared channel.

In the method for reporting the capability of the terminal provided in the embodiments of the present disclosure, the first DCI includes at least one of: a DCI format 1_1, a DCI format 1_2, a DCI format 0_1, or a DCI format 0_2.

In some embodiments, the first DCI may include the DCI format 1_1.

For example, in a case where the first DCI indicates the association relationship between the PDSCH and the TCI state, the first DCI may be the DCI format 1_1.

In some embodiments, the first DCI may include the DCI format 1_2.

For example, in a case where the first DCI indicates the association relationship between the PDSCH and the TCI state, the first DCI may be the DCI format 1_2.

In some embodiments, the first DCI may include the DCI format 0_1.

For example, in a case where the first DCI indicates the association relationship between the PUSCH and the TCI state, the first DCI may be the DCI format 0_1.

In some embodiments, the first DCI may include the DCI format 0_2.

For example, in a case where the first DCI indicates the association relationship between the PUSCH and the TCI state, the first DCI may be the DCI format 0_2.

In some embodiments, the first DCI may further include: DCI format 1_1, and DCI format 1_2; DCI format 1_1, and DCI format 0_1; DCI format 1_1, and DCI format 0_2; DCI format 1_2, and DCI format 0_1; DCI format 1_2, and DCI format 0_2; DCI format 0_1, and DCI format 0_2; DCI format 1_1, DCI format 1_2, and DCI format 0_1; DCI format 1_1, DCI format 1_2, and DCI format 0_2; DCI format 1_1, DCI format 0_1, and DCI format 0_2; DCI format 1_2, DCI format 0_1, and DCI format 0_2; or DCI format 1_1, DCI format 1_2, DCI format 0_1, and DCI format 0_2.

The present disclosure provides multiple forms of the first DCI to indicate the relationship between different physical shared channels and the TCI state, thereby implementing the dynamic switching between the single TRP scheme and the SFN scheme, and thus improving the transmission flexibility of the physical shared channel.

In the method for reporting the capability of the terminal provided in the embodiments of the present disclosure, the method may further include: receiving second capability information, in which the second capability information indicates that the terminal has a capability of supporting the SFN scheme, or indicates that the terminal has a capability of only supporting a PDSCH SFN scheme.

In some embodiments, the network device may further receive the second capability information sent by the terminal. The second capability information may indicate that the terminal has the capability of supporting the SFN scheme.

For example, the second capability information may indicate that the terminal supports the sfn-Scheme.

In some embodiments, the network device may receive the second capability information sent by the terminal. The second capability information may indicate that the terminal has the capability of only supporting the PDSCH SFN scheme.

For example, the second capability information may indicate that the terminal supports the sfn-Scheme-PDSCH-only.

It may be understood that a second capability may be a prerequisite capability for the terminal to support a first capability.

In the present disclosure, information of other capabilities of the terminal different from the first capability information may be further reported, thereby improving the transmission flexibility of the physical shared channel based on the unified TCI state.

In the method for reporting the capability of the terminal provided in the embodiments of the present disclosure, the second indication information is carried by a first MAC CE, the first MAC CE indicates the at least one set of TCI states, and the at least one set of TCI states corresponds to one code point of a TCI state field in second DCI.

In some embodiments, the second indication information may be carried by the first MAC CE. The first MAC CE may indicate the at least one set of TCI states, for example, *N* sets of TCI states. The at least one set of TCI states may correspond to one code point of the TCI state field in the second DCI. In this case, the TCI state field in the second DCI does not need to further indicate the code point.

The present disclosure provides a method for indicating the at least one set of TCI states by carrying the second indication information by the MAC CE, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

In some embodiments, the second indication information may be carried by the second MAC CE and the third DCI. The second MAC CE may indicate multiple at least one set of TCI states, for example, multiple *N* sets of TCI states. It may be understood that each of the *N* sets of TCI states corresponds to one code point. That is, the second MAC CE indicates the *N* sets of TCI states corresponding to the multiple code points respectively. The TCI state field in the third DCI indicates one code point among the multiple code points. Therefore, a specific *N* sets of TCI states among the multiple *N* sets of TCI states is further indicated.

It may be understood that values of *N* may be the same or different in the *N* sets of TCI states corresponding to the multiple code points.

The present disclosure provides a method for indicating the at least one set of TCI states by carrying the second indication information by the MAC CE and the DCI, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In the method for reporting the capability of the terminal provided in the embodiments of the present disclosure, the physical shared channel includes at least one of: the PUSCH, or the PDSCH.

In some embodiments, the physical shared channel includes the PUSCH.

For example, the terminal may determine an association relationship between the PUSCH and the at least one set of TCI states according to the TCI selection field in the first indication information.

In some embodiments, the physical shared channel includes the PDSCH.

For example, the terminal may determine an association relationship between the PDSCH and the at least one set of TCI states according to the TCI selection field in the first indication information.

In some embodiments, the physical shared channel includes the PUSCH and the PDSCH.

For example, the terminal may determine, according to the TCI selection field in the first indication information, the association relationship between the PUSCH and the at least one set of TCI states, and the association relationship between the PDSCH and the at least one set of TCI states.

The present disclosure is applicable to various physical shared channels to indicate the relationship between the corresponding physical shared channel and the TCI state according to the first indication information, thereby implementing the dynamic switching between the single TRP scheme and the SFN scheme, and improving the transmission flexibility of the physical shared channel.

It should be noted that those skilled in the art will appreciate that the various implementations/examples in above embodiments of the present disclosure may be used in conjunction with the foregoing embodiments or may be used independently. The principles of the various implementations/examples are similar, whether used alone or in conjunction with the foregoing embodiments. In an implementation of the present disclosure, some embodiments are described as embodiments that are used together. Certainly, it will be understood by those skilled in the art that such illustrations are not intended to limit the embodiments of the present disclosure.

Based on the same concept, embodiments of the present disclosure also provide an apparatus and a device for reporting a capability of a terminal.

It may be understood that, the apparatus and the device for reporting the capability of the terminal provided in the embodiments of the present disclosure includes corresponding hardware structures and/or software modules for performing various functions in order to implement the above-mentioned functions. The embodiments of the present disclosure may be implemented in a form of hardware or a combination of hardware and computer software in combination with units and algorithm steps of each example disclosed in the embodiments of the present disclosure. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present disclosure.

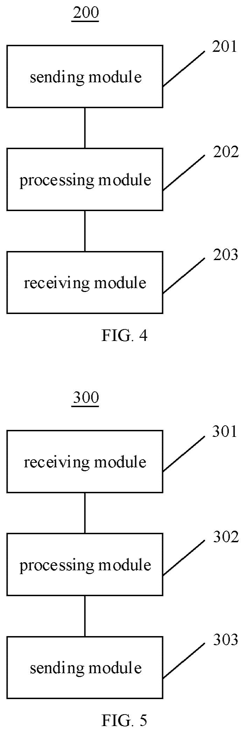

FIG. 4 is a schematic diagram illustrating an apparatus for reporting a capability of a terminal according to an illustrative embodiment. Referring to FIG. 4, the apparatus 200 includes a sending module 201 configured to send first capability information, in which the first capability information indicates whether the terminal has a capability of supporting a dynamic switching between a single TRP scheme and an SFN scheme, and the terminal is configured with a unified TCI state.

In the present disclosure, by reporting whether the terminal has the capability of supporting the dynamic switching between the single TRP scheme and the SFN scheme, the transmission flexibility of the physical shared channel based on the unified TCI state is improved.

In some implementations, the apparatus 200 further includes: a processing module 202 configured to determine a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In the present disclosure, in a case of the unified TCI state, the TCI state used may be determined according to the TCI selection field in the first indication information or according to the default rule, and the transmission on the physical shared channel according to the single TRP scheme and the SFN scheme may be adapted, thereby improving the transmission flexibility of the physical shared channel.

In some implementations, the physical shared channel is configured for an SFN-based transmission.

The physical shared channel involved in the present disclosure may be configured for the SFN-based transmission, which improves the transmission flexibility of the physical shared channel.

In some implementations, the processing module 202 is further configured to perform the dynamic switching between the single TRP scheme and the SFN scheme according to the TCI selection field in the first indication information.

In the present disclosure, in a case of the unified TCI state, the dynamic switching between the single TRP scheme and the SFN scheme may be indicated according to the TCI selection field in the first indication information, thereby improving the transmission flexibility of the physical shared channel.

In some implementations, the apparatus further includes: a receiving module 203 configured to receive second indication information, in which the second indication information is used to determine the unified TCI state, and the unified TCI state includes at least one set of TCI states.

The present disclosure is applicable to a scenario where the unified TCI state includes the multiple sets of TCI states. By reporting whether the terminal has the capability of supporting the dynamic switching between the single TRP scheme and the SFN scheme, the transmission flexibility of the physical shared channel based on the unified TCI state is improved.

In some implementations, a set of TCI states includes any one of: a UL TCI state and/or a DL TCI state; or a joint TCI state.

The present disclosure provides various expressions of a set of TCI states, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the receiving module 203 is further configured to receive the first indication information carried by first DCI.

In the present disclosure, in a case of the unified TCI state, a relationship between the physical shared channel and the TCI state is determined according to the TCI selection field in the first indication information, such that the dynamic switching between the single TRP scheme and the SFN scheme may be indicated, thereby improving the transmission flexibility of the physical shared channel.

In some implementations, the first DCI includes at least one of: a DCI format 1_1, a DCI format 1_2, a DCI format 0_1, or a DCI format 0_2.

The present disclosure provides multiple forms of the first DCI to indicate the relationship between different physical shared channels and the TCI state, thereby implementing the dynamic switching between the single TRP scheme and the SFN scheme, and thus improving the transmission flexibility of the physical shared channel.

In some implementations, the sending module 201 is further configured to send second capability information, in which the second capability information indicates that the terminal has a capability of supporting the SFN scheme, or indicates that the terminal has a capability of only supporting a PDSCH SFN scheme.

In the present disclosure, information of other capabilities of the terminal different from the first capability information may be further reported, thereby improving the transmission flexibility of the physical shared channel based on the unified TCI state.

In some implementations, the second indication information is carried by a first MAC CE, the first MAC CE indicates the at least one set of TCI states, and the at least one set of TCI states corresponds to one code point of a TCI state field in second DCI.

The present disclosure provides a method for indicating the at least one set of TCI states by carrying the second indication information by the MAC CE, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

The present disclosure provides a method for indicating the at least one set of TCI states by carrying the second indication information by the MAC CE and the DCI, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the physical shared channel includes at least one of: the PUSCH, or the PDSCH.

The present disclosure is applicable to various physical shared channels to indicate the relationship between the corresponding physical shared channel and the TCI state according to the first indication information, thereby implementing the dynamic switching between the single TRP scheme and the SFN scheme, and improving the transmission flexibility of the physical shared channel.

FIG. 5 is a schematic diagram illustrating another apparatus for reporting a capability of a terminal according to an illustrative embodiment. Referring to FIG. 5, the apparatus 300 includes a receiving module 301 configured to receive first capability information, in which the first capability information indicates whether the terminal has a capability of supporting a dynamic switching between a single TRP scheme and an SFN scheme, and the terminal is configured with a unified TCI state.

In the present disclosure, by reporting whether the terminal has the capability of supporting the dynamic switching between the single TRP scheme and the SFN scheme, the transmission flexibility of the physical shared channel based on the unified TCI state is improved.

In some implementations, the apparatus 300 further includes: a processing module 302 configured to determine a TCI state used for a transmission on a physical shared channel according to a TCI selection field in first indication information or according to a default rule, in which the TCI selection field is used to determine to select one or more sets of TCI states from the unified TCI state for the transmission on the physical shared channel in response to the terminal supporting the dynamic switching; or the TCI selection field is used to determine to select multiple sets of TCI states from the unified TCI state for the transmission on the physical shared channel in response to the terminal not supporting the dynamic switching; or it is determined to select multiple sets of TCI states from the unified TCI state for the transmission on the physical shared channel according to the default rule in response to the terminal not supporting the dynamic switching and the first indication information not including the TCI selection field.

In the present disclosure, in a case of the unified TCI state, the TCI state used may be determined according to the TCI selection field in the first indication information or according to the default rule, and the transmission on the physical shared channel according to the single TRP scheme and the SFN scheme may be adapted, thereby improving the transmission flexibility of the physical shared channel.

In some implementations, the physical shared channel is configured for an SFN-based transmission.

The physical shared channel involved in the present disclosure may be configured for the SFN-based transmission, which improves the transmission flexibility of the physical shared channel.

In some implementations, the TCI selection field in the first indication information is further used to determine that the terminal performs the dynamic switching between the single TRP scheme and the SFN scheme.

In the present disclosure, in a case of the unified TCI state, the dynamic switching between the single TRP scheme and the SFN scheme may be indicated according to the TCI selection field in the first indication information, thereby improving the transmission flexibility of the physical shared channel.

In some implementations, the apparatus further includes: a sending module 303 configured to send second indication information, in which the second indication information is used to determine the unified TCI state, and the unified TCI state includes at least one set of TCI states.

The present disclosure is applicable to a scenario where the unified TCI state includes the multiple sets of TCI states. By reporting whether the terminal has the capability of supporting the dynamic switching between the single TRP scheme and the SFN scheme, the transmission flexibility of the physical shared channel based on the unified TCI state is improved.

In some implementations, a set of TCI states includes any one of: a UL TCI state and/or a DL TCI state; or a joint TCI state.

The present disclosure provides various expressions of a set of TCI states, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the sending module 303 is further configured to send the first indication information carried by first DCI.

In the present disclosure, in a case of the unified TCI state, a relationship between the physical shared channel and the TCI state is determined according to the TCI selection field in the first indication information, such that the dynamic switching between the single TRP scheme and the SFN scheme may be indicated, thereby improving the transmission flexibility of the physical shared channel.

In some implementations, the first DCI includes at least one of: a DCI format 1_1, a DCI format 1_2, a DCI format 0_1, or a DCI format 0_2.

The present disclosure provides multiple forms of the first DCI to indicate the relationship between different physical shared channels and the TCI state, thereby implementing the dynamic switching between the single TRP scheme and the SFN scheme, and thus improving the transmission flexibility of the physical shared channel.

In some implementations, the receiving module 301 is further configured to receive second capability information, in which the second capability information indicates that the terminal has a capability of supporting the SFN scheme, or indicates that the terminal has a capability of only supporting a PDSCH SFN scheme.

In the present disclosure, information of other capabilities of the terminal different from the first capability information may be further reported, thereby improving the transmission flexibility of the physical shared channel based on the unified TCI state.

In some implementations, the second indication information may be carried by a first MAC CE, the first MAC CE indicates the at least one set of TCI states, and the at least one set of TCI states corresponds to one code point of a TCI state field in second DCI.

The present disclosure provides a method for indicating the at least one set of TCI states by carrying the second indication information by the MAC CE, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

The present disclosure provides a method for indicating the at least one set of TCI states by carrying the second indication information by the MAC CE and the DCI, such that in the scenario of the unified TCI state, the transmission flexibility of the physical shared channel based on the unified TCI state is improved by reporting whether the terminal has the capability of supporting the dynamic switching between the single TRP scheme and the SFN scheme.

In some implementations, the physical shared channel includes at least one of: the PUSCH, or the PDSCH.

The present disclosure is applicable to various physical shared channels to indicate the relationship between the corresponding physical shared channel and the TCI state according to the first indication information, thereby implementing the dynamic switching between the single TRP scheme and the SFN scheme, and improving the transmission flexibility of the physical shared channel.

With respect to the apparatus in the above embodiments, the specific manners for performing operations for individual modules therein have been described in detail in the embodiments regarding the method, which will not be elaborated herein.

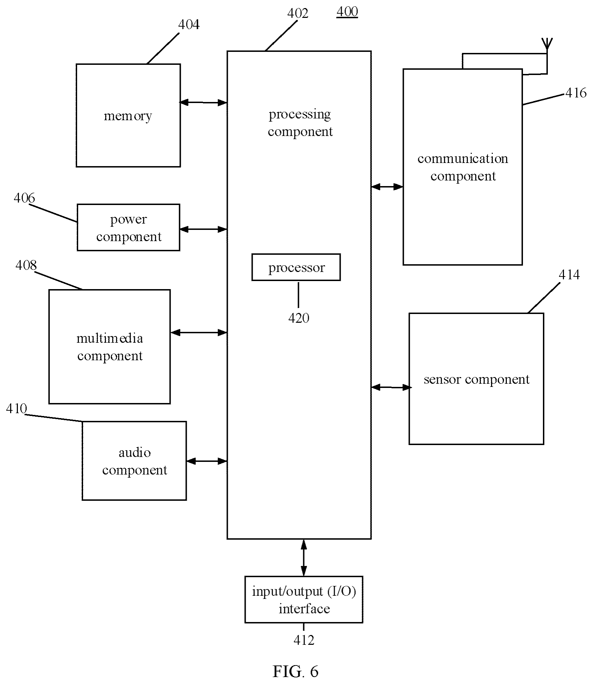

FIG. 6 is a schematic diagram illustrating a device for reporting a capability of a terminal according to an illustrative embodiment. For example, the device 400 may be any terminal of a mobile phone, a computer, a digital broadcast terminal, a messaging device, a game console, a tablet device, a medical device, a fitness device, a personal digital assistant, or the like.

Referring to FIG. 6, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, phone calls, data communications, camera operations, and recording operations. The processing component 402 may include one or more processors 420 to execute instructions to perform all or some of the steps in the above-described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, videos, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as keyboards, click wheels, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may further include a light sensor, such as a CMOS or CCD image sensor, for use in imaging applications. In some embodiments, the sensor component 414 may further include an accelerometer sensor, a gyroscope sensor, a magnetic sensor, a pressure sensor, or a temperature sensor.

The communication component 416 is configured to facilitate communication, wired or wireless, between the device 400 and other devices. The device 400 may access a wireless network based on a communication standard, such as Wi-Fi, 2G, or 3G, or a combination thereof. In an illustrative embodiment, the communication component 416 receives a broadcast signal or broadcast associated information from an external broadcast management system via a broadcast channel. In an illustrative embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer-readable storage medium including instructions, such as included in the memory 404, executable by the processor 420 in the device 400, for completing the above-mentioned methods. For example, the non-transitory computer-readable storage medium may be a ROM, a random access memory (RAM), a CD-ROM, a magnetic tape, a floppy disc, an optical data storage device, and the like.

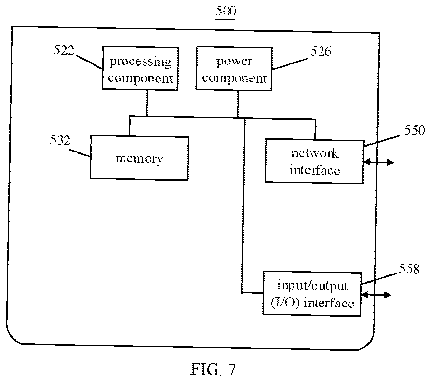

FIG. 7 is a schematic diagram illustrating another device for reporting a capability of a terminal according to an illustrative embodiment. For example, the device 500 may be provided as a base station or a server. Referring to FIG. 7, the device 500 includes a processing component 522 and a memory resource represented by a memory 532. The processing component 522 may further include one or more processors. The memory 532 is configured to store instructions executable by the processing component 522, such as an application program. The application program stored in the memory 532 may include one or more modules each corresponding to a set of instructions. In addition, the processing component 522 is configured to execute the instructions to perform the above-mentioned methods.

The device 500 further includes a power component 526 configured to perform a power management on the device 500, a wired or wireless network interface 550 configured to connect the device 500 to the network, and an input/output (I/O) interface 558. The device 500 may operate an operating system stored in the memory 532, such as Windows Server^{™}, Mac OS X^{™}, Unix^{™}, Linux^{™}, Free BSD^{™}, or the like.

The present disclosure proposes that in a case of indication of the unified TCI state of single-DCI multiple TRPs, whether the terminal has a capability of supporting a dynamic SFN is reported in a case where the physical shared channel is configured as an SFN method, thereby improving the transmission flexibility of the PDSCH/PUSCH of multiple TRPs based on the unified TCI state.

It is further understood that "a plurality" in this disclosure refers to two or more, and other quantifiers are similar thereto. "And/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present disclosure.

It is further understood that the meaning of terms such as "in response to", "if", and the like involved in the present disclosure will depend on the context and the actual use scenario. As used herein, the term "in response to" may be construed to mean "when" or "upon" or "if" or "in a case where" depending on the context.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for reporting a capability of a terminal, performed by the terminal, comprising:
sending first capability information, wherein the first capability information indicates whether the terminal has a capability of supporting a dynamic switching between a single transmission reception point (TRP) scheme and a single frequency network (SFN) scheme, and the terminal is configured with a unified transmission configuration indication (TCI) state.

2. The method of claim 1, further comprising:
determining a TCI state used for a transmission on a physical shared channel according to a TCI selection field in first indication information or according to a default rule,
wherein the TCI selection field is used to determine to select one or more sets of TCI states from the unified TCI state for the transmission on the physical shared channel in response to the terminal supporting the dynamic switching; or
the TCI selection field is used to determine to select multiple sets of TCI states from the unified TCI state for the transmission on the physical shared channel in response to the terminal not supporting the dynamic switching; or
it is determined to select multiple sets of TCI states from the unified TCI state for the transmission on the physical shared channel according to the default rule in response to the terminal not supporting the dynamic switching and the first indication information not comprising the TCI selection field.

3. The method of claim 2, wherein the physical shared channel is configured for an SFN-based transmission.

4. The method of claim 2 or 3, further comprising:
performing the dynamic switching between the single TRP scheme and the SFN scheme according to the TCI selection field in the first indication information.

5. The method of any one of claims 1 to 4, further comprising:
receiving second indication information, wherein the second indication information is used to determine the unified TCI state, and the unified TCI state comprises at least one set of TCI states.

6. The method of claim 5, wherein a set of TCI states comprises any one of:
an uplink (UL) TCI state and/or a downlink (DL) TCI state; or
a joint TCI state.

7. The method of any one of claims 1 to 6, further comprising:
receiving first indication information carried by first downlink control information (DCI).

8. The method of claim 7, wherein the first DCI comprises at least one of:
a DCI format 1_1;
a DCI format 1_2;
a DCI format 0_1; or
a DCI format 0 2.

9. The method of any one of claims 1 to 8, further comprising:
sending second capability information, wherein the second capability information indicates that the terminal has a capability of supporting the SFN scheme, or indicates that the terminal has a capability of only supporting a physical downlink shared channel (PDSCH) SFN scheme.

10. The method of claim 5 or 6, wherein the second indication information is carried by a first media access control-control element (MAC CE), the first MAC CE indicates the at least one set of TCI states, and the at least one set of TCI states corresponds to one code point of a TCI state field in second DCI.

11. The method of claim 5 or 6, wherein the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

12. The method of any one of claims 1 to 11, wherein the physical shared channel comprises at least one of:
a physical uplink shared channel (PUSCH); or
a PDSCH.

13. A method for reporting a capability of a terminal, performed by a network device, comprising:
receiving first capability information, wherein the first capability information indicates whether the terminal has a capability of supporting a dynamic switching between a single transmission reception point (TRP) scheme and a single frequency network (SFN) scheme, and the terminal is configured with a unified transmission configuration indication (TCI) state.

14. The method of claim 13, further comprising:
determining a TCI state used for a transmission on a physical shared channel according to a TCI selection field in first indication information or according to a default rule,
wherein the TCI selection field is used to determine to select one or more sets of TCI states from the unified TCI state for the transmission on the physical shared channel in response to the terminal supporting the dynamic switching; or
the TCI selection field is used to determine to select multiple sets of TCI states from the unified TCI state for the transmission on the physical shared channel in response to the terminal not supporting the dynamic switching; or
it is determined to select multiple sets of TCI states from the unified TCI state for the transmission on the physical shared channel according to the default rule in response to the terminal not supporting the dynamic switching and the first indication information not comprising the TCI selection field.

15. The method of claim 14, wherein the physical shared channel is configured for an SFN-based transmission.

16. The method of claim 14 or 15, wherein the TCI selection field in the first indication information is further used to determine that the terminal performs the dynamic switching between the single TRP scheme and the SFN scheme.

17. The method of any one of claims 13 to 16, further comprising:
sending second indication information, wherein the second indication information is used to determine the unified TCI state, and the unified TCI state comprises at least one set of TCI states.

18. The method of claim 17, wherein a set of TCI states comprises any one of:
an uplink (UL) TCI state and/or a downlink (DL) TCI state; or
a joint TCI state.

19. The method of any one of claims 13 to 18, further comprising:
sending first indication information carried by first downlink control information (DCI).

20. The method of claim 19, wherein the first DCI comprises at least one of:
a DCI format 1_1;
a DCI format 1_2;
a DCI format 0_1; or
a DCI format 0 2.

21. The method of any one of claims 13 to 20, further comprising:
receiving second capability information, wherein the second capability information indicates that the terminal has a capability of supporting the SFN scheme, or indicates that the terminal has a capability of only supporting a physical downlink shared channel (PDSCH) SFN scheme.

22. The method of claim 17 or 18, wherein the second indication information is carried by a first media access control-control element (MAC CE), the first MAC CE indicates the at least one set of TCI states, and the at least one set of TCI states corresponds to one code point of a TCI state field in second DCI.

23. The method of claim 17 or 18, wherein the second indication information is carried by a second MAC CE and third DCI, the second MAC CE indicates at least one set of TCI states corresponding to multiple code points of a TCI state field in the third DCI, respectively, and the TCI state field in the third DCI indicates one code point among the multiple code points.

24. The method of any one of claims 13 to 23, wherein the physical shared channel comprises at least one of:
a physical uplink shared channel (PUSCH); or
a PDSCH.

25. An apparatus for reporting a capability of a terminal, comprising:
a sending module configured to send first capability information, wherein the first capability information indicates whether the terminal has a capability of supporting a dynamic switching between a single transmission reception point (TRP) scheme and a single frequency network (SFN) scheme, and the terminal is configured with a unified transmission configuration indication (TCI) state.

26. An apparatus for reporting a capability of a terminal, comprising:
a receiving module configured to receive first capability information, wherein the first capability information indicates whether the terminal has a capability of supporting a dynamic switching between a single transmission reception point (TRP) scheme and a single frequency network (SFN) scheme, and the terminal is configured with a unified transmission configuration indication (TCI) state.

27. A device for reporting a capability of a terminal, comprising:
a processor; and
a memory for storing instructions executable by the processor,
wherein the processor is configured to perform the method of any one of claims 1 to 12.

28. A device for reporting a capability of a terminal, comprising:
a processor; and
a memory for storing instructions executable by the processor,
wherein the processor is configured to perform the method of any one of claims 13 to 24.

29. A non-transitory computer-readable storage medium having stored therein instructions that, when executed by a processor of a terminal, enable the terminal to perform the method of any one of claims 1 to 12.

30. A non-transitory computer-readable storage medium having stored therein instructions that, when executed by a processor of a network device, enable the network device to perform the method of any one of claims 13 to 24.
